# EUROPÄISCHE PATENTSCHRIFT

(11) **EP 1 404 011 B1**
(45) Veröffentlichungstag und Bekanntmachung des Hinweises auf die Patenterteilung: **09.07.2008**
(21) Anmeldenummer: 03020655.1
(22) Anmeldetag: 11.09.2003
(51) Int. Cl.: H02K 41/02, F15B 15/00

(54) **Linearantriebsvorrichtung**
Linear drive
Entraînement linéaire

(30) Priorität: 24.09.2002 DE 10244260
(43) Veröffentlichungstag der Anmeldung: 31.03.2004
(60) Teilanmeldung: 08001396.4
(73) Patentinhaber: FESTO AG & Co. KG, 73734 Esslingen (DE)
(72) Erfinder: Finkbeiner, Matthias, 71159 Mötzingen (DE); Feyrer, Thomas, 73732 Esslingen (DE); Neumann, Rüdiger, Dr.-Ing., 73760 Ostfildern (DE); Hartmann, Armin, 73760 Ostfildern (DE)
(74) Vertreter: Abel, Martin

(56) Entgegenhaltungen:
- WO-A-93/01646
- WO-A-98/25032
- WO-A-99/14724
- DE-A- 10 046 535
- DE-U- 20 113 014
- US-A- 5 605 462

## Beschreibung

Die Erfindung betrifft eine Linearantriebsvorrichtung, mit einem Stator und einem relativ zu dem Stator linear bewegbaren Läufer, und mit einem elektrodynamischen Lineardirektantriebssystem, das zwei antriebsmäßig zusammenwirkende Antriebseinrichtungen in Gestalt einer Spuleneinrichtung und einer Magneteinrichtung aufweist, von denen die eine am Stator und die andere am Läufer angeordnet ist und durch die der Läufer mit einer ersten Stellkraft beaufschlagbar ist, und mit einem zusätzlich vorhandenen Fluidkraftantriebssystem, das eine Fluidbeaufschlagung des Läufers zur Erzeugung einer von der ersten Stellkraft unabhängigen zweiten Stellkraft ermöglicht, wobei der Läufer über zwei gesonderte, jedoch axial bewegungsgekoppelte und in zwei getrennten, jeweils Längserstreckung aufweisenden und sich parallel zueinander erstreckenden Aufnahmeräumen angeordnete Abtriebsteile verfügt, von denen das eine mit einer der Antriebseinrichtungen des Lineardirektantriebes ausgestattet ist und von denen das andere wenigstens eine axial orientierte, zur gesteuerten Fluidbeaufschlagung vorgesehene Beaufschlagungsfläche aufweist.

Aus der DE 201 13 014 U1 geht eine Linearantriebsvorrichtung hervor, die allein aus einem Lineardirektantrieb besteht, der einen von einem Gehäuse gebildeten Stator enthält, in dem der Läufer linear beweglich angeordnet ist. Der Läufer ist ringförmig ausgebildet und mit einer Spuleneinrichtung versehen, wobei er eine mit einem Magnetsystem ausgestattete Statorstange umschließt.

Wird die Spuleneinrichtung getaktet mit einer Erregerspannung beaufschlagt, bildet sich ein wanderndes Magnetfeld aus, das eine erste Stellkraft auf den Läufer ausübt, der sich mithin in einer Bewegungsrichtung relativ zum Stator verlagert. Diese Bewegung kann vom Läufer abgegriffen werden, um ein Bauteil zu bewegen. Eine vergleichbare Linearantriebsvorrichtung geht aus der EP 1 150 416 A1 hervor. Bei ihr ist allerdings die Spuleneinrichtung am Stator und die Magneteinrichtung am Läufer angeordnet.

Einen elektrischen Linearantrieb mit ähnlichem Aufbau zeigt auch die DE 198 53 942 C1.

All diesen Linearantriebsvorrichtungen ist gemein, dass sie zwar eine exakte Positionierung des Läufers und somit der damit verbundenen Bauteile ermöglichen. Sie eignen sich besonders, wenn kleine Lasten sehr dynamisch und präzise bewegt werden müssen. Kurzzeitig können sehr hohe Stellkräfte erzielt werden. Problematisch ist allerdings, dass lediglich relativ geringe Dauerkräfte zur Verfügung stehen. Müssen Lasten über längere Zeit gehalten oder entlang einer längeren Wegstrecke bewegt werden, erwärmt sich das Antriebssystem und kann daher nur die Dauerkraft zu Verfügung stellen.

Aus der DE 195 03 145 C2 ist eine Linearantriebsvorrichtung bekannt, in der die Funktionen eines fluidkraftbetätigten Linearantriebes und eines elektrischen Spindelantriebes kombiniert sind. Diese Antriebskombination bereitet jedoch Probleme vor allem in der Abdichtung des Läufers gegenüber der Antriebsspindel. Außerdem rotiert die Antriebsspindel bei der durch Fluidkraft hervorgerufenen Linearbewegung des Läufers ständig mit, was die Dynamik beeinträchtigt und hohe Reibung verursacht, die einen frühzeitigen Verschließ zur Folge haben kann.

Eine aus der WO 99/14724 bekannte Linearantriebsvorrichtung der eingangs genannten Art ist eine Kombination aus einem fluidkraftbetätigten Linearantrieb und einem elektrodynamischen Lineardirektantrieb. Bei einer möglichen Ausführungsform sind die elektrischen und die fluidischen Antriebsfunktionen in einem einzigen Antriebsteil zusammengefasst. Bei einer Ausführungsform gemäß dem Oberbegriff des Patentanspruches 1 verfügt die Linearantriebsvorrichtung über zwei gesonderte Abtriebsteile, von denen das eine zum Lineardirektantriebssystem und das andere zum Fluidkraftantriebssystem gehört. Eine derartige funktionelle Trennung hat den Vorteil, dass die beiden Systemkomponenten ohne gegenseitige Rücksichtnahme optimiert werden können. Durch die Bewegungskopplung ist weiterhin der gewünschte Kraftabgriff unter den schon erwähnten Vorteilen möglich.

Es ist die Aufgabe der vorliegenden Erfindung, eine Linearantriebsvorrichtung zu schaffen, die sowohl einen sehr dynamischen und präzisen Betrieb gestattet als auch hohe Dauerkräfte aufbringen kann.

Zur Lösung dieser Aufgabe sind die Kennzeichnenden Merkmale des Patentanspruches 1 vorgesehen.

Auf diese Weise liegt eine Linearantriebsvorrichtung vor, die die Vorteile eines elektrodynamischen Lineardirektantriebes und eines fluidkraftbetätigten Linearantriebes in sich vereinigt. Durch das Lineardirektantriebssystem sind weiterhin hohe Beschleunigungen und präzise Positionierungen möglich. Aufgrund des zusätzlich vorhandenen Fluidkraftantriebssystems können überdies durch entsprechende Fluidbeaufschlagung dauerhaft sehr hohe Stellkräfte erzielt werden, was es ermöglicht, auch schwere Lasten über längere Zeit zu halten oder über eine längere Wegstrecke zu bewegen. Dabei können die ersten und zweiten Stellkräfte je nach Ausstattung oder Ansteuerungsart alternativ oder gleichzeitig, sowie gleichgerichtet oder gegensinnig aufgebracht werden. Beispielsweise lässt sich durch das Fluidkraftantriebssystem die Funktionalität einer Luftfeder realisieren oder kann eine konstante Drucksteuerung verwirklicht werden, um eine Last in der Schwebe zu halten. Auch ein servorpneumatischer Betrieb ist möglich, bei dem der Fluiddruck und damit die handhabbare Last und deren Dynamik nach Bedarf geregelt werden können.

Vorteilhafte Weiterbildungen der Erfindung gehen aus den Unteransprüchen hervor.

Nachfolgend wird die Erfindung anhand der beiliegenden Zeichnung näher erläutert. In dieser zeigt:

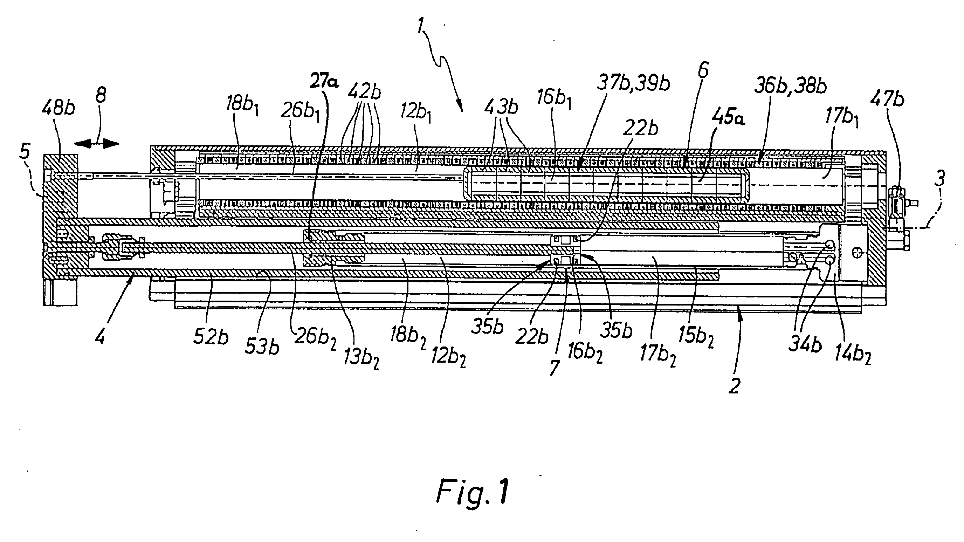

- Figur 1: eine Bauform der Linearantriebsvorrichtung, bei der die elektromagnetische Antriebskraft und die fluidische Antriebskraft an gesonderten Abtriebsteilen aufgebracht wird.

Die in ihrer Gesamtheit mit Bezugsziffer 1 versehene Linearantriebsvorrichtung enthält einen Längserstrekkung aufweisenden Stator 2 und einen relativ zu dem Stator 2 in Richtung dessen Längsachse 3 linear verstellbaren Läufer 4. An dem Läufer 4 sind außerhalb des Stators 2 Befestigungsmittel 5 beliebiger Art vorgesehen, über die zu bewegende Bauteile am Läufer 4 befestigt werden können.

Die Linearantriebsvorrichtung 1 ist mit einem elektrodynamischen Lineardirektantriebssystem 6 und zugleich auch mit einem Fluidkraftantriebssystem 7 ausgestattet. Durch das Lineardirektantriebssystem 6 kann der Läufer 4 mit einer ersten Stellkraft beaufschlagt werden, die auf elektromagnetischem bzw. elektrodynamischem Wirkprinzip beruht. Durch das Fluidkraftantriebssystem 7 ist eine Beaufschlagung des Läufers 4 mit einer zweiten Stellkraft möglich, die aus der Fluidbeaufschlagung des Läufers 4 herrührt. Somit kann der Läufer 4 mit zwei voneinander unabhängigen ersten und zweiten Stellkräften beaufschlagt werden, um seine durch einen Doppelpfeil angedeutete Linearbewegung 8 hervorzurufen und um den Läufer 4 bei Bedarf an einer bestimmten Stelle zu stoppen.

Die Wirkungsrichtung der Stellkräfte und die zeitliche Abfolge ihrer Erzeugung kann nach Bedarf gewählt werden. Auf diese Weise ist beispielsweise eine gleichgerichtete Beaufschlagung des Läufers 4 möglich, um durch Addition der Stellkräfte in der einen oder anderen Richtung besonders schwere Lasten zu transportieren oder hohe Stellgeschwindigkeiten zu erreichen. Auch einander entgegengesetzte Stellkräfte sind möglich, beispielsweise um den sich mit hoher Geschwindigkeit bewegenden Läufer abzubremsen oder um den Läufer 4 an einer bestimmten Stelle relativ zum Stator 2 zu fixieren.Daneben können die Stellkräfte auch so aufgebracht werden, dass zur gleichen Zeit nur eine der Stellkräfte wirksam ist.

Die Integration der beiden Antriebssysteme in ein und dieselbe Linearantriebsvorrichtung 1 ermöglicht sehr kompakte Abmessungen, wobei quasi ein Hybridantrieb vorliegt, der die Stärken der beiden Antriebssysteme auf ideale Weise in sich vereinigt. Die Abmessungen der Linearantriebsvorrichtung 1 sind nicht oder nur geringfügig größer als diejenigen eines ausschließlich elektrodynamischen oder fluidkraftbetätigten Linearantriebes.

Im folgenden sei im einzelnen auf die in der Zeichnung abgebildete Ausführungsform eingegangen.

Es ist ein Stator 2 vorgesehen, der in seinem Inneren einen Längserstreckung aufweisenden Aufnahmeraum 12b₂definiert. Der Aufnahmeraum 12b₂ ist stirnseitig von einer ersten bzw. zweiten Abschlusswand 13b₂, 14b₂und peripher von einer Umfangswand 15b₂ begrenzt.

Im Inneren des Aufnahmeraumes 12b₂ befindet sich ein zum Läufer 4 gehörendes zweites Abtriebsteil 16b₂, das bevorzugt kolbenartig ausgebildet ist und den Aufnahmeraum 12b₂ unter Abdichtung in zwei axial aufeinanderfolgende erste und zweite Teilräume 17b₂, 18b₂ unterteilt.

Um die fluiddichte Trennung der beiden Teilräume 17b₂, 18b₂ zu erzielen, ist das zweite Abtriebsteil 16b₂ am Außenumfang mit ringförmigen ersten Dichtungsmitteln 22b ausgestattet, die unter Abdichtung an der Innenfläche der Umfangswand 15b₂ anliegen.

Das zweite Abtriebsteil 16b₂ gemäß Figur 1 füllt den gesamten Querschnitt des Aufnahmeraumes 12b₂ aus. Weitere Dichtungsmittel zur fluiddichten Abtrennung der beiden Teilräume 17b₂, 18b₂ sind daher nicht erforderlich.

Mit dem zweiten Abtriebsteil 16b₂ ist mindestens ein zweites Kraftabgriffsglied 26b₂ des Läufers 4 bewegungsgekoppelt. Dieses ermöglicht außerhalb des Aufnahmeraumes 12b₂ einen Kraftabgriff. Der Kraftabgriff erfolgt an den Befestigungsmitteln 5, die außerhalb des Stators 2 an dem Kraftabgriffsglied 26b₂ vorgesehen sind.

Beim Ausführungsbeispiel der Figur 1 ist das zweite Kraftabgriffsglied 26b₂ stangenartig ausgebildet. Es ragt an einer Stirnseite vom zweiten Abtriebsteil 16b₂ weg, wobei es den zugeordneten Teilraum 18b₂ und die diesen begrenzende Abschlusswand 13b₂ unter Abdichtung verschiebbar nach außen hin durchsetzt. Dritte Dichtungsmittel, die an der betreffenden Abschlusswand 13b₂ angeordnet sind, und das zweite Kraftabgriffsglied 26b₂ umschließen, sind bei 27a angedeutet.

Die beiden Teilräume 17b₂, 18b₂ sind jeweils zur gesteuerten Fluidbeaufschlagung ausgebildet. In jeden Teilraum 17b₂, 18b₂ mündet ein Fluidkanal 34b, über den ein fluidisches Druckmedium, beispielsweise Druckluft oder ein hydraulisches Medium, zu- und abgeführt werden kann. Die Zu- und Abfuhr wird durch eine nicht näher dargestellte Ventileinrichtung gesteuert, die ihrerseits durch eine ebenfalls nicht näher dargestellte elektronische Steuereinrichtung angesteuert wird.

Die beiden einem jeweiligen Teilraum 17b₂, 18b₂ zugewandten Stirnflächen des Abtriebsteiles 16b₂ bilden jeweils eine Beaufschlagungsfläche 35b. Das in einen Teilraum 17b₂, 18b₂ eingespeiste Fluid wirkt auf die zugeordnete Beaufschlagungsfläche 35b und ruft somit die auf den Läufer 4 wirkende, oben erwähnte zweite Stellkraft hervor, bei der es sich um eine Fluidkraft handelt.

Abweichend vom gezeigten Ausführungsbeispiel könnte auch nur einer der Teilräume 17b₂, 18b₂ zur gesteuerten Fluidbeaufschlagung vorgesehen sein. Der andere Teilraum wäre in diesem Falle insbesondere ständig mit der Atmosphäre verbunden.

Die beiden Teilräume 17b₂, 18b₂, die beiden Fluidbeaufschlagungsflächen 35b und die beiden Fluidkanäle 34b gehören somit zu dem erwähnten Fluidkraftantriebssystem 7, mit dem auf den Läufer 4 eine fluidisch erzeugte zweite Stellkraft ausgeübt werden kann.

Zu dem Lineardirektantriebssystem 6 gehören zwei antriebsmäßig zusammenwirkende Antriebseinrichtungen, von denen die eine, erste Antriebseinrichtung 36b am Stator 2 und die andere, zweite Antriebseinrichtung 37b am Läufer 4 angeordnet ist. Eine dieser Antriebseinrichtungen - beim Ausführungsbeispiel die erste Antriebseinrichtung 36b - ist von einen Spuleneinrichtung 38b gebildet, die mehrere koaxial aufeinanderfolgende Antriebsspulen 42b enthält. Die jeweils andere Antriebseinrichtung ist von einer Magneteinrichtung 39b gebildet, die über einen und vorzugsweise über mehrere axial aufeinanderfolgende Permanentmagnete 43b verfügt. Die Permanentmagnete 43b sind bevorzugt ringförmig ausgebildet. Zweckmäßigerweise liegt eine radiale Polarisierung der Permanentmagnete 43b vor, wobei unmittelbar benachbarte Permanentmagnete 43b einander entgegengesetzt gepolt sind.

Beim Ausführungsbeispiel sitzen die zweckmäßigerweise ringförmig ausgebildeten Permanentmagnete 43b auf einem Kernkörper 45a eines ersten Abtriebsteiles 16b₁. Bei Bedarf können sie von einer Gleithülse umschlossen sein.

Die Spuleneinrichtung 38b ist koaxial zur Magneteinrichtung 39b ausgebildet.

Das Spulensystem 38b ist getaktet mit einer Erregerspannung beaufschlagbar. Eine derartige Ansteuerung ermöglichende elektrische Leiter sind bei 47b angedeutet.

Die beiden Antriebseinrichtungen 36b, 37b arbeiten nach dem elektrodynamischen Prinzip zusammen. Die Antriebsspulen 42b werden einzeln oder in Gruppen zeitlich aufeinanderfolgend erregt, wobei das erzeugte Magnetfeld mit den von der permanentmagnetischen Magneteinrichtung 39b hervorgerufenen Magnetfeldern zusammenwirkt, so dass sich Rückwirkungskräfte einstellen, die den Läufer 4 - je nach Polungsrichtung - in die eine oder andere Richtung beaufschlagen. Die Rückwirkungskräfte bilden dabei die oben erwähnte erste Stellkraft.

Durch aufeinander abgestimmte Betätigung der beiden Antriebssysteme 6, 7 können die am Läufer 4 angreifenden ersten und zweiten Stellkräfte nach Bedarf variiert und kombiniert werden, was es ermöglicht, den Läufer 4 beispielsweise über längere Zeit mit hoher Geschwindigkeit zum Transport einer hohen Last einzusetzen, oder aber den Läufer 4 stark zu beschleunigen oder präzise in gewünschten Stellungen zu positionieren.

Die erwähnte elektronische Steuereinrichtung steuert dabei sowohl die Erzeugung der fluidischen als auch der elektrodynamischen Stellkraft, wobei auch eine geregelte Betriebsweise möglich ist.

Die fluidische Stellkraft und die elektrodynamische Stellkraft wirken dabei auf getrennte Komponenten des Läufers 4 ein.

Die Linearantriebsvorrichtung 1 verfügt über zwei gesonderte Abtriebsteile 16b₁ und 16b₂. Diese beiden Abtriebsteile sind jeweils in einem gesonderten Aufnahmeraum 12b₁, 12b₂ untergebracht. Diese beiden Aufnahmeräume erstrekken sich parallel zueinander und sind Bestandteil des Stators 2.

Das erste Abtriebsteil 16b₁ gehört zum Lineardirektantriebssystem 6. Von ihm ragt ein erstes Kraftabgriffsglied 26b₁ weg, das stirnseitig aus dem Stator 2 herausragt. Das erste Abtriebsteil 16b₁ unterteilt den es aufnehmenden Aufnahmeraum 12b₁ in einen ersten Teilraum 17b₁ und einen zweiten Teilraum 18b₁.

Das zweite Abtriebsteil 16b₂ gehört zum Fluidkraftantriebssystem 7. Es unterteilt den es aufnehmenden Aufnahmeraum 12b₂ wie schon erwähnt in einen ersten Teilraum 17b₂ und einen zweiten Teilraum 18b₂. Ausgehend von dem zweiten Abtriebsteil 16b₂ ragt das zweite Kraftabgriffsglied 26b₂ axial zur gleichen Seite wie das erste Kraftabgriffsglied 26b₁ und ragt wie dieses stirnseitig aus dem Stator 2 heraus. Außerhalb des Stators 2 sind die beiden Kraftabgriffsglieder 26b₁, 26b₂ mittels einer Jocheinrichtung 48b fest miteinander verbunden, so dass sie axial bewegungsgekoppelt sind. An der Jocheinrichtung 48b sind die Befestigungsmittel 5 vorgesehen.

Durch Aktivierung des Lineardirektantriebssystems 6 kann eine elektrodynamisch erzeugte erste Stellkraft auf das erste Abtriebsteil 16b₁ ausgeübt werden. Durch Aktivierung des Fluidkraftantriebssystems 7 kann eine fluidisch erzeugte zweite Stellkraft auf das kolbenartig ausgebildete zweite Abtriebsteil 16b₂ ausgeübt werden. Da beide Abtriebsteile bewegungsgekoppelt sind und zum Läufer 4 gehören, kann dieser mithin wiederum sehr variabel durch die beiden Stellkräfte beaufschlagt werden.

Bei der Linearantriebsvorrichtung 1 der Figur 1 ist zusätzlich noch ein insbesondere rohrförmig ausgebildetes Führungsteil 52b vorgesehen, das ebenfalls mit dem Läufer 4 bewegungsgekoppelt ist und das in verschiebbar geführter Weise in eine Führungsausnehmung 53b des Stators 2 eintaucht.

## Patentansprüche

1. Linearantriebsvorrichtung, mit einem Stator (2) und einem relativ zu dem Stator (2) linear bewegbaren Läufer (4), mit einem elektrodynamischen Lineardirektantriebssystem (6), das zwei antriebsmäßig zusammenwirkende Antriebseinrichtungen (36a, 37a; 36b, 37b) in Gestalt einer Spuleneinrichtung (38a, 38b) und einer Magneteinrichtung (39a, 39b) aufweist, von denen die eine am Stator (2) und die andere am Läufer (4) angeordnet ist und durch die der Läufer (4) mit einer ersten Stellkraft beaufschlagbar ist, und mit einem zusätzlich vorhandenen Fluidkraftantriebssystem (7), das eine Fluidbeaufschlagung des Läufers (4) zur Erzeugung einer von der ersten Stellkraft unabhängigen zweiten Stellkraft ermöglicht, wobei der Läufer (4) über zwei gesonderte, jedoch axial bewegungsgekoppelte und in zwei getrennten, jeweils Längserstreckung aufweisenden und sich parallel zueinander erstreckenden Aufnahmeräumen (12b₁, 12b₂) angeordnete Abtriebsteile (16b₁, 16b₂) verfügt, von denen das eine mit einer der Antriebseinrichtungen (36b, 37b) des Lineardirektantriebssystems (6) ausgestattet ist und von denen das andere wenigstens eine axial orientierte, zur gesteuerten Fluidbeaufschlagung vorgesehene Beaufschlagungsfläche (35b) aufweist, **dadurch gekennzeichnet, dass** die Spuleneinrichtung (38a, 38b) mehrere koaxial aufeinanderfolgende Antriebsspulen (42a, 42b) und die Magneteinrichtung (39a, 39b) einen oder mehrere axial aufeinanderfolgende Permanentmagnete (43a, 43b) enthält, dass die beiden Aufnahmeräume (12b₁, 12b₂) Bestandteil eines gemeinsamen Stators (2) sind, durch den die beiden Antriebssysteme (6, 7) zu einer schon vor der Montage am Einsatzort einheitlich handhabbaren Baueinheit zusammengefasst sind, und dass zusätzlich ein ebenfalls mit dem Läufer (4) bewegungsgekoppeltes, in einer Führungsausnehmung (53b) des Stators (2) verschiebbar geführtes Führungsteil (52b) vorhanden ist.

2. Linearantriebsvorrichtung nach Anspruch 1, **dadurch gekennzeichnet, dass** das die mindestens eine Beaufschlagungsfläche (35b) aufweisende Abtriebsteil (16b₂) kolbenartig ausgebildet ist und den zugeordneten Aufnahmeraum (12b₂) unter Abdichtung in zwei axial aufeinanderfolgende Teilräume (17b₂, 18b₂) unterteilt, von denen wenigstens einer zur gesteuerten Fluidbeaufschlagung ausgebildet ist.

3. Linearantriebsvorrichtung nach Anspruch 2, **dadurch gekennzeichnet, dass** beide Teilräume (17b₂, 18b₂) des Aufnahmeraumes (12b₂) des Fluidkraftantriebssystems (7) zur gesteuerten Fluidbeaufschlagung ausgebildet sind.

4. Linearantriebsvorrichtung nach einem der Ansprüche 1 bis 3, **dadurch gekennzeichnet, dass** von den beiden Abtriebsteilen (16b₁, 16b₂), zur gleichen Seite hin, jeweils mindestens ein Kraftabgriffsglied (26b₁, 26b₂) wegragt, wobei die Kraftabgriffsglieder (26b₁, 26b₂) außerhalb des Stators (2) unter Bildung einer Kraftabgriffseinheit durch eine Jocheinrichtung (48b) miteinander bewegungsgekoppelt sind.

5. Linearantriebsvorrichtung nach Anspruch 4, **dadurch gekennzeichnet, dass** wenigstens ein Kraftabgriffglied (26b₁, 2.6b₂) stangenartig ausgebildet ist und axial vom Abtriebsteil (16a) wegragt, wobei es die zugeordnete statorseitige Abschlusswand (13a) des Aufnahmeraumes (12a) nach außen hin durchsetzt.

6. Linearantriebsvorrichtung nach einem der Ansprüche 1 bis 5, **dadurch gekennzeichnet, dass** das Führungsteil (52b) rohrförmig ausgebildet ist.

## Claims

1. Linear drive device with a stator (2) and a runner (4), capable of linear movement relative to the stator (2), with an electro-dynamic linear direct drive system (6) which has two drive units (36a, 37a; 36b, 37b) working in conjunction for drive purposes, in the form of a coil unit (38a, 38b) and a magnet unit (39a, 39b), with one of these mounted on the stator (2) and the other on the runner (4), and through which the runner (4) may be subjected to a first positioning force, and with an additionally provided fluid power drive system (7) which permits fluid pressurisation of the runner (4) to generate a second positioning force independent of the first positioning force, wherein the runner (4) has two output members (16b₁, 16b₂), separate but axially movement-coupled and with two separate mounting spaces (12b₁, 12b₂) each extending longitudinally and parallel to one another, of which one is equipped with one of the drive units (36b, 37b) of the linear direct drive system (6), while the other has one or more axially aligned pressure-loading surfaces (35b) provided for controlled fluid pressurisation, **characterised in that** the coil unit (38a, 38b) contains several coaxially consecutive driving coils (42a, 42b) and the magnet unit (39a, 39b) has several axially consecutive permanent magnets (43a, 43b), that the two mounting spaces (12b₁, 12b₂) are part of a common stator (2), through which the two drive systems (6, 7) are combined into a unit capable of uniform handling even before installation at the point of use, and that there is also provided a guide element (52b), similarly movement-coupled to the runner (4) and slidably guided in a guide recess (53b) of the stator (2).

2. Linear drive device according to claim 1, **characterised in that** the output member (16b₂) with the pressure-loading surface or surfaces (35b) is piston-like in form and divides the assigned mounting space (12b₂) with sealing into two axially consecutive compartments (17b₂, 18b₂), at least one of which is designed for controlled fluid pressurisation.

3. Linear drive device according to claim 2, **characterised in that** both compartments (17b₂, 18b₂) of the mounting space (12b₂) of the fluid power drive system (7) are designed for controlled fluid pressurisation.

4. Linear drive device according to any of claims 1 to 3 **characterised in that** one or more power take-off elements (26b₁, 26b₂) extends away to the same side from each of the two output members (16b₁, 16b₂), wherein the power take-off elements (26b₁, 26b₂) are movement-coupled to one another outside the stator (2) by a yoke device (48b), to form a power take-off unit.

5. Linear drive device according to claim 4, **characterised in that** at least one of the power take-off elements (26b₁, 26b₂) is rod-like in form and extends axially away from the output member (16a), while passing through the assigned stator-side end wall (13a) of the mounting space (12a) towards the outside.

6. Linear drive device according to any of claims 1 to 5, **characterised in that** the guide element (52b) is tubular in shape.

## Revendications

1. Dispositif d'entraînement linéaire, avec un stator (2) et un curseur (4) pouvant se déplacer linéairement par rapport au stator (2), avec un système d'entraînement direct linéaire (6) électrodynamique qui présente deux dispositifs d'entraînement (36a, 37a ; 36b, 37b) coopérant dans l'entraînement sous la forme d'un dispositif à bobines (38a, 38b) et d'un dispositif magnétique (39a, 39b), dont l'un est disposé sur le stator (2) et l'autre sur le curseur (4) et grâce auxquels le curseur (4) peut être sollicité par une première force de positionnement, et avec un système d'entraînement hydraulique (7) présent en plus qui permet une sollicitation fluidique du curseur (4) pour générer une seconde force de positionnement indépendante de la première, le curseur (4) disposant de deux parties de sortie (16b₁, 16b₂) séparées, toutefois couplées en mouvement axialement et disposées dans deux espaces de réception (12b₁, 12b₂), séparés, présentant chacun une étendue longitudinale et s'étendant parallèlement, dont l'un est équipé d'un des dispositifs d'entraînement (36b, 37b) du système d'entraînement direct linéaire (6) et dont l'autre présente au moins une surface de sollicitation (35b) orientée axialement, prévue pour la sollicitation fluidique commandée, **caractérisé en ce que** le dispositif à bobines (38a, 38b) contient plusieurs bobines d'entraînement (42a, 42b) se suivant coaxialement et le dispositif magnétique (39a, 39b) contient un ou plusieurs aimants permanents (43a, 43b) se suivant axialement, **en ce que** les deux espaces de réception (12b₁, 12b₂) font partie d'un stator commun (2), grâce auquel les deux systèmes d'entraînement (6, 7) sont réunis pour former une unité constructive déjà manipulable de manière unifaire avant le montage sur le lieu d'utilisation et **en ce qu'**en outre, une partie de guidage (52b) également couplée en mouvement avec le curseur (4), guidée en translation dans un évidement de guidage (53b) du stator (2) est présente.

2. Dispositif d'entraînement linéaire selon la revendication 1, **caractérisé en ce que** la partie de sortie (16b₂) présentant au moins une surface de sollicitation (35b) est réalisée comme un piston et divise l'espace de réception (12b₂) associé de manière étanche en deux espaces partiels (17b₂, 18b₂) se suivant axialement, dont au moins l'un est conformé pour la sollicitation fluidique commandée.

3. Dispositif d'entraînement linéaire selon la revendication 2, **caractérisé en ce que** les deux espaces partiels (17b₂, 18b₂) de l'espace de réception (12b₂) du système d'entraînement hydraulique (7) sont conformés pour la sollicitation fluidique commandée.

4. Dispositif d'entraînement linéaire selon l'une des revendications 1 à 3, **caractérisé en ce que** respectivement au moins un organe de prélèvement de force (26b₁, 26b₂) dépasse des deux parties de sortie (16b₁, 16b₂) vers le même côté, les organes de prélèvement de force (26b₁, 26b₂) étant couplés en mouvement à l'extérieur du stator (2) en formant une unité de prélèvement de force par un dispositif de joug (48b).

5. Dispositif d'entraînement linéaire selon la revendication 4, **caractérisé en ce qu'**au moins un organe de prélèvement de force (26b₁, 26b₂) est réalisé comme une barre et dépasse axialement de la partie de sortie (16a), celui-ci traversant vers l'extérieur la paroi de fermeture (13a) associée côté stator de l'espace de réception (12a).

6. Dispositif d'entraînement linéaire selon l'une des revendications 1 à 5, **caractérisé en ce que** la partie de guidage (52b) est réalisée de manière tubulaire.
